# EUROPÄISCHE PATENTSCHRIFT

(11) **EP 2 247 917 B1**
(45) Veröffentlichungstag und Bekanntmachung des Hinweises auf die Patenterteilung: **30.11.2016**
(21) Anmeldenummer: 09715498.3
(22) Anmeldetag: 24.02.2009
(51) Int. Cl.: G01B 7/34

(54) **TASTARM IN SANDWICHBAUWEISE UND VERFAHREN ZU SEINER HERSTELLUNG**
SENSING ARM WITH SANDWICH DESIGN AND METHOD FOR ITS PRODUCTION
BRAS PALPEUR À STRUCTURE EN SANDWICH ET PROCÉDÉ DE FABRICATION DUDIT BRAS

(30) Priorität: 27.02.2008 DE 102008011477
(43) Veröffentlichungstag der Anmeldung: 10.11.2010
(73) Patentinhaber: CARL MAHR HOLDING GMBH, 37073 Göttingen (DE)
(72) Erfinder: ZIEGENBEIN, Rainer, 37124 Rosdorf (DE)
(74) Vertreter: Rüger, Barthelt & Abel
(86) Internationale Anmeldenummer: PCT/EP2009/052151
(87) Internationale Veröffentlichungsnummer: WO 2009/106519

(56) Entgegenhaltungen:
- WO-A-2007/024711
- DE-B3-102005 035 785

## Beschreibung

Die Erfindung betrifft einen Tastarm, ein Tastmessgerät und ein Verfahren zur Herstellung des Tastarms.

Messgeräte mit Tastarmen, insbesondere eindimensional messenden Tastarmen wie Tastschnittgeräten, Rauheitstastern und dergleichen sind grundsätzlich bekannt. Es wird dazu auf die DE 43 38 481 A1, die DE 90 16 737 U1 sowie die US 6 026 678 A wie auch insbesondere die DE 10 2005 035 785 B3 verwiesen. Letztgenannte Druckschrift offenbart ein Tastgerät mit einem Tastarm, der an dem Tastgerät schwenkbar gelagert ist. Zur Lagerung dient ein Halteabschnitt, der über Biegefedern mit dem übrigen Tastarm verbunden ist, der einen zweiarmigen Hebel bildet. Ein langer schlanker Hebelarm erstreckt sich bis zu einer Tastspitze, die zur Abtastung einer Werkstückoberfläche dient. Ein zweiter Hebelarm in Gestalt eines in Gegenrichtung ragenden plattenförmigen Abschnitts dient hingegen zur Erfassung von Auslenkungen des Tastarms, d.h. feinen Schwenkbewegungen durch Änderung der Induktivität benachbarter Spulen. Das Federscharnier zur Lagerung des Tastarms und zur Erzeugung der Messkraft besteht aus dem Material des Tastarms. Es wird durch einen besonders geschwächten, d.h. in seiner Dicke reduzierten Abschnitt des ansonsten als dünne ebene Platte ausgebildeten Tastarms gebildet.

Aus der WO 2007/024711 A2 ist ein Atomic-Force-Sensor behannt, der in einem Halbleiterprozess erzeugt wird. Er weist einen Mehrschichtaufbau auf, der einen mechanisch steifen Taster umfasst. Dieser ist über tordierbare Körperabschnitte an einem Grundkörper verankert.

Solche Tastarme sind hochempfindliche Bauelemente, die sorgfältigster Handhabung bedürfen. Außerdem müssen die Federscharniere aufwendig und sorgfältig bearbeitet werden, um die gewünschte Messkraft einzujustieren.

Davon ausgehend ist es Aufgabe der Erfindung, einen in der Handhabung robusteren und einfach herzustellenden Tastarm für ein Tastmessgerät zu schaffen. Es ist des weiteren Aufgabe der Erfindung, ein entsprechendes Fertigungsverfahren anzugeben. Diese Aufgaben werden mit den Gegenständen der Ansprüche 1 und 6 gelöst:

Der erfindungsgemäße Tastarm eignet sich als Oberflächentaster, Längentaster und Formtaster sowie zur Erfassung von Oberflächen eines Werkstücks. Seine Besonderheit besteht darin, dass der Tastarm aus wenigstens zwei, vorzugsweise drei Schichten besteht, die permanent miteinander verbunden sind. Mindestens eine der Schichten, vorzugsweise die mittlere Schicht, weist eine physikalische Eigenschaft auf, die ihre Nutzung als Lagerung bzw. Scharnier gestattet. Diese Schicht ist vorzugsweise als dünne, federnde Folie, erfindungsgemäß als Metallfolie, d.h. als besonders dünnes Blech ausgebildet. Die Blechdicke kann zweckentsprechend gewählt werden. In einem Ausführungsbeispiel beträgt sie beispielsweise 10 µm, 20 µm oder 30 µm. Die Folie kann aus jedem geeigneten Material bestehen. Vorzugsweise handelt es sich um eine dünne Stahlfolie, insbesondere eine dünne Federstahlfolie.

Die anderen beiden Schichten bestehen vorzugsweise aus einem dickeren und vor allem steiferen Material, wie beispielsweise Blech, z.B. Eisenblech, Leichtmetallblech oder auch einem Nichtmetall, wie beispielsweise Keramikplatten, Kunststoffplatten oder sonstigen Kunststoffelementen oder dergleichen. Die beiden anderen Schichten können mit weiteren Elementen verbunden werden, wie beispielsweise Tastspitzen, Fassungen für Tastspitzen, optisch oder magnetisch wirksamen oder sonstigen Elementen. Beide Schichten sind an mindestens einer Stelle unterbrochen, d.h. in Abschnitte oder Elemente unterteilt.

Vorzugsweise bilden die die Federfolie zwischen einander einschließenden Schichten einen Halteabschnitt und einen Hebelabschnitt. Der Halteabschnitt besteht aus Abschnitten der beiden einfassenden Schichten, die als Halteelemente angesehen werden können. Der Hebelabschnitt besteht aus Abschnitten der einfassenden Schichten, die als Hebelelemente angesehen werden können. Der Halteabschnitt fasst die federnde Folie sandwichartig. Die Hebelabschnitte bilden mit der federnden Folie ebenfalls eine Sandwichanordnung. Beide Sandwichanordnungen sind vorzugsweise dadurch gekennzeichnet, dass die Ränder zwischen der federnden Folie und den sie einfassenden Schichten miteinander übereinstimmen.

Die Folie und die an ihr befestigten Elemente sind vorzugsweise permanent z.B. durch Kleben, Schweißen, Laserschweißen, Plasmaschweißen oder andere geeignete Mittel miteinander verbunden. Dies ergibt einfach herstellbare und in der Handhabung robuste Tastarme. Die Federeigenschaften der Federscharniere können ohne großen Fertigungsaufwand sehr präzise eingestellt werden. Die Tastarme erweisen sich insbesondere auch wegen der möglichen idealen Materialwahl für die federnde Folie als stoßunempfindlich und auch sonst in der Handhabung robust.

Der genannte Aufbau des Tastarms eröffnet außerdem den Weg zu einem überaus rationellen und insbesondere großserientauglichen Fertigungsverfahren. Zur Durchführung desselben werden vorzugsweise zunächst eine geeignete federnde, vorzugsweise unterbrechungsfreie Folie und zwei Deckkörperzuschnitte bereitgestellt. Die federnde Folie sowie die Deckkörperzuschnitte sind vorzugsweise im Umriss etwa rechteckig. Vorzugsweise sind sie so groß, dass ihre Fläche ein Vielfaches der Fläche eines einzelnen Tastarms beträgt. Damit können in einem Fertigungsschritt eine ganze Serie von Tastarmen hergestellt werden.

Vorzugsweise sind die Deckkörperzuschnitte dazu an denjenigen Stellen, an denen die herzustellenden Tastarme Federscharniere haben sollen, mit Ausnehmungen versehen. Die Ausnehmungen sind vorzugsweise als Schlitze, eckig, z.B. rechteckig, oder rund berandete Öffnungen geformt und weisen eine Länge auf, die der Länge des späteren Federscharniers entspricht. Die Ausnehmungen können durch Laserschneiden hergestellt werden. Vorzugsweise sind der erste und der zweite Deckkörperzuschnitt zueinander spiegelbildlich geformt. Nach dem Erzeugen der Aussparungen mittels des Lasers wird einer der Zuschnitte gewendet, so dass sie einander, wenn sie aufeinander gelegt werden, diejenige Seite zuwenden, die beim Laserschneiden dem Laserkopf zugewandt war.

In einem nächsten Fertigungsschritt wird nun die federnde Folie zwischen dem ersten und dem zweiten Deckkörperzuschnitt angeordnet, wobei die Deckkörperzuschnitte so zueinander ausgerichtet werden, dass die vorgefertigten Aussparungen miteinander fluchten. Dies kann durch geeignete Indexbohrungen geschehen, die bei der Herstellung der Ausnehmungen ausgebildet worden sind.

Sind die Folie und die Deckkörper aufeinander angeordnet und zueinander mit hoher maschinell erreichbarer Genauigkeit ausgerichtet worden, werden sie miteinander verbunden. Dies kann durch Laserschweißen geschehen. Beim dreischichtigen Aufbau und einer Federblechfolie von ca. 10 bis 20 oder auch 30 µm Dicke und Deckkörperzuschnitten in Form von Blechen mit einer Dicke von jeweils ca. 0,2 mm können die drei Blechschichten durch Laserschweißpunkte miteinander verbunden werden. Es können auch Klebetechniken oder andere Verbindungstechniken angewandt werden.

Nach Herstellung des dreischichtigen Verbunds werden aus der so gebildeten Sandwichstruktur die Tastarme z.B. mit einem Laser oder einem anderen geeigneten Schneidwerkzeug (z.B. in Form eines Laserstrahls) herausgeschnitten. Außerdem können weitere Öffnungen an den Tastarmen angebracht werden, wie beispielsweise Befestigungsbohrungen, Schlitze und dergleichen.

Es ist auch möglich, einen geringfügig abgewandelten Fertigungsablauf anzuwenden. Bei diesem werden aus den Deckkörperzuschnitten, d.h. dem Grundblech und dem Deckblech zunächst die Konturen der gewünschten Tastarme heraus gelasert, d.h. mittels Laserstrahls teilweise freigeschnitten. Jeder Deckkörperzuschnitt enthält die späteren Hebelelemente und die späteren Halteelemente in der gewünschten Positionierung. Die Hebel- und Halteelemente sind dann über jeweils einen oder mehrere Stege mit Abfallbereichen der Deckkörperzuschnitte verbunden. Jedoch halten solche Hilfsstege die einzelnen Abschnitte des Tastarms noch zusammen, so dass die freigeschnittenen Tastarme in den betreffenden Blechabschnitt des Deckkörpers gehalten und als Gruppe weiterbearbeitet werden können.

Es werden nun die so teilweise vorgeschnittenen Deckkörperzuschnitte zu beiden Seiten der Federblechfolie positioniert und zueinander ausgerichtet. Der Laser kann dann die Anordnung so bearbeiten, dass steife Bereiche federnde Lagerbereiche, Befestigungsbohrung und sonstige Bereiche, wie beispielsweise ein magnetisch leitfähiger Sensorbereich, entstehen. Anschließend kann der Laser die drei vorhandenen Schichten in der Vorrichtung zu einer Einheit verschweißen. Nachdem die drei Schichten zu einer Einheit fest verschweißt sind, werden die Hilfsstege vom Laser beseitigt, so dass die Tastarme vereinzelt werden.

Weitere Abwandlungen der Fertigungsreihenfolge sind möglich. Jedoch beruhen alle Abwandlungen auf dem Gedanken, die auf beiden Flachseiten der Federblechfolie vorhandenen Elemente aus entsprechenden Deckkörpern, z.B. Blechen, herauszuschneiden und möglichst erst dann von dem übrigen Deckkörper zu lösen, wenn eine Verbindung zu der federnden Folie hergestellt ist. Auf diese Weise wird immer ein einfaches prozesssicheres und massenfertigungstaugliches Fertigungsverfahren erhalten.

Weitere Einzelheiten vorteilhafter Ausführungsformen der Erfindung sind Gegenstand der Beschreibung, der Zeichnung oder von Ansprüchen. Die Beschreibung ist auf wesentliche Aspekte der Erfindung und sonstiger Gegebenheiten beschränkt. Die Zeichnung ergänzt die Beschreibung und offenbart dazu weitere Details. Es zeigen:
Fig. 1 ein Tastgerät mit erfindungsgemäßem Tastarm,
Fig. 2 das Tastgerät nach Fig. 1 mit abgenommenem Tastarm von unten,
Fig. 3 den Tastarm des Tastgeräts nach Fig. 1 in gesonderter perspektivischer ausschnittsweiser Darstellung,
Fig. 4 den Tastarm nach Fig. 3 in einer anderen Größendarstellung,
Fig. 5 den Tastarm nach Fig. 4 in einer Explosionsdarstellung und
Fig. 6 Elemente des Tastarms während seiner Herstellung in perspektivischer ausschnittsweiser Darstellung.

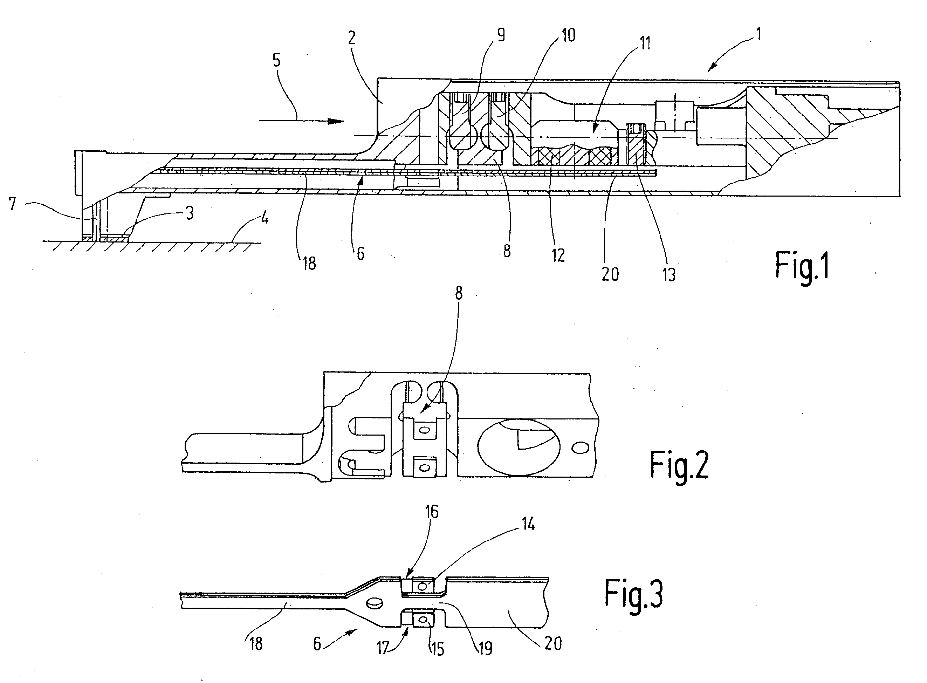

In Fig. 1 ist als Beispiel für ein Tastgerät 1 ein Rauheitstaster veranschaulicht. Der Rauheitstaster 1 weist ein Gehäuse 2 auf, das über eine Kufe 3 auf einer Werkstückoberfläche 4 ruht bzw. in einer durch einen Pfeil 5 bezeichneten Richtung über diese geschleppt wird. In dem Gehäuse 2 ist ein Tastarm 6 angeordnet, der an einem Ende eine Tastnadel 7 trägt. Die Kufe 3 weist eine entsprechende Öffnung auf, durch die die Tastnadel 7 die Werkstückoberfläche 4 berührt. Der Tastarm 6 ist an einem Lager 8 gehalten, das über zwei Einstellschrauben 9, 10 justierbar ausgebildet sein kann.

Der Tastarm 6 wirkt mit einer Sensorspule 11 mit einer Wicklung 12 zusammen, die dazu vorgesehen ist, seine geringen Schwenkbewegungen zu erfassen. Zur Einstellung eines Anschlags oder sonstigen Justage kann eine entsprechende Justierschraube 13 vorgesehen sein.

Die Lagerung des Tastarms 6 an dem Lager 8 geht insbesondere auch aus den Figuren 2 und 3 hervor. Dabei zeigt Fig. 3 insbesondere den Aufbau des Tastarms 6. Dieser weist Halteabschnitte 14, 15 auf, die über Federscharniere 16, 17 mit dem übrigen Tastarm 6 verbunden sind. Dieser bildet einen langen zweiarmigen Hebel mit einem langen schlanken Nabelträgerabschnitt 18, einen sich zwischen den Halteabschnitten 14, 15 hindurch erstreckenden Steg 19 und einen sich von dem Steg 19 und dem Nadelträgerabschnitt 18 weg erstreckenden Paddel 20. Das Paddel 20 wirkt mit der Sensorspule 11 zusammen, wobei es über den Steg 19 starr mit dem Nadelträgerabschnitt 18 verbunden ist.

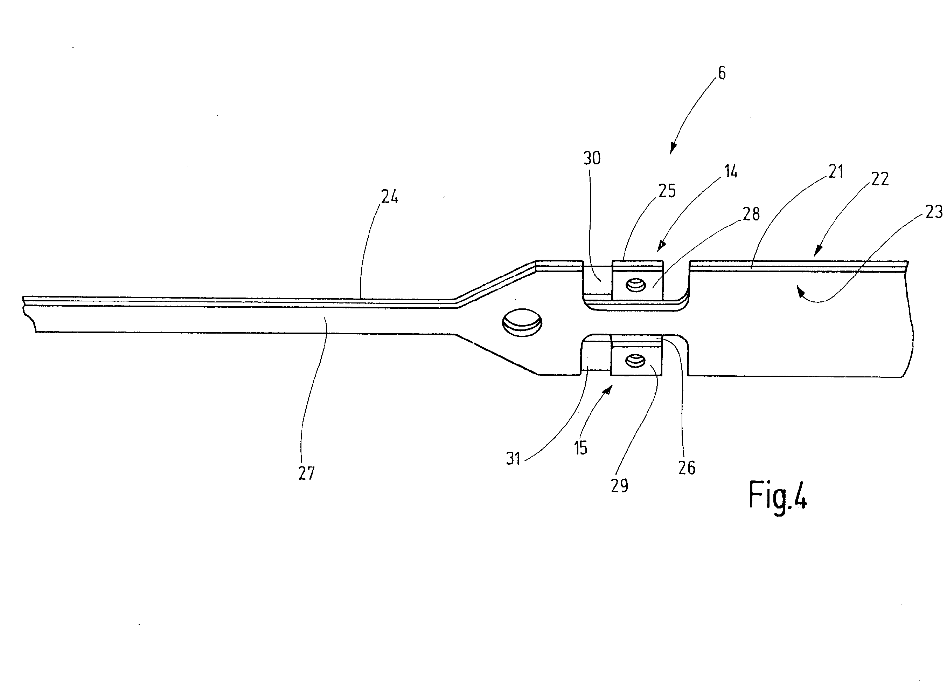

Wie aus Fig. 4 erkennbar ist, ist der gesamte Tastarm 6 als Sandwichstruktur aufgebaut. Etwa in einer Mittelebene des insgesamt flächenhaft, d.h. eben ausgebildeten Tastarms 6 ist eine Folie 21 angeordnet, die erfindungsgemäß eine Metallfolie, beispielsweise in Form eines dünnen Federstahlblechs ist. Es kann eine Dicke von z.B. 10, 20 oder 30 µm oder einen anderen geeigneten Wert aufweisen. Die Folie 21 trägt auf ihren beiden Flachseiten starre Deckkörper 22, 23, beispielsweise in Form dünner Bleche. Sie können aus gleichem oder unterschiedlichem Material bestehen. Beispielsweise kann der obere Deckkörper 22 aus einem magnetischen oder magnetisierbaren Blech bestehen, während der untere Deckkörper 23 aus dem gleichen Material oder einem anderen Material, beispielsweise einem Leichtmetallblech bestehen kann. Vorzugsweise weisen die Deckkörper 22, 23 gleiche Temperaturausdehnungskoeffizienten auf. Sie sind im Wesentlichen flächenhaft mit der Folie 21 verbunden. Der Deckkörper 22 ist in ein Hebelelement 24 und Haltelemente 25, 26 unterteilt. Der Deckkörper 23 ist in ein Hebelelement 27 und Halteelemente 28, 29 unterteilt. Die beiden Halteelemente 25, 28 fassen die Folie 21 zwischen einander nach Art einer Sandwichstruktur. Gleiches gilt für die Halteelemente 26, 29 und die Hebelelemente 24, 27.

Die Halteelemente 25, 28 bilden mit der dazwischen liegenden Folie 21 den Halteabschnitt 14. Die Halteelemente 26, 29 bilden mit der dazwischen liegenden Folie den Halteabschnitt 15. Die Hebelabschnitte 24, 27 bilden mit der dazwischen liegenden Folie einen zweiarmigen Hebel mit dem Nadelträgerabschnitt 18, dem Steg 19 und dem Paddel 20. Der Hebel ist über freiliegende Folienabschnitte, die Federscharniere 30, 31 bilden, mit den Halteabschnitten 14, 15 verbunden. Die Federscharniere 30, 31 definieren eine gemeinsame Scharnierachse und somit eine Schwenkachse für den Tastarm 6. Die Halteelemente 24, 26, 28, 29 und die Hebelabschnitte 24, 27 sind an dem fertigen Tastarm 6 in genau der Orientierung und Positionierung angeordnet, in der sie aus den Deckkörpern 22, 23 freigeschnitten worden sind. Entsprechendes gilt, wenn nur ein Deckkörperzuschnitt Verwendung findet.

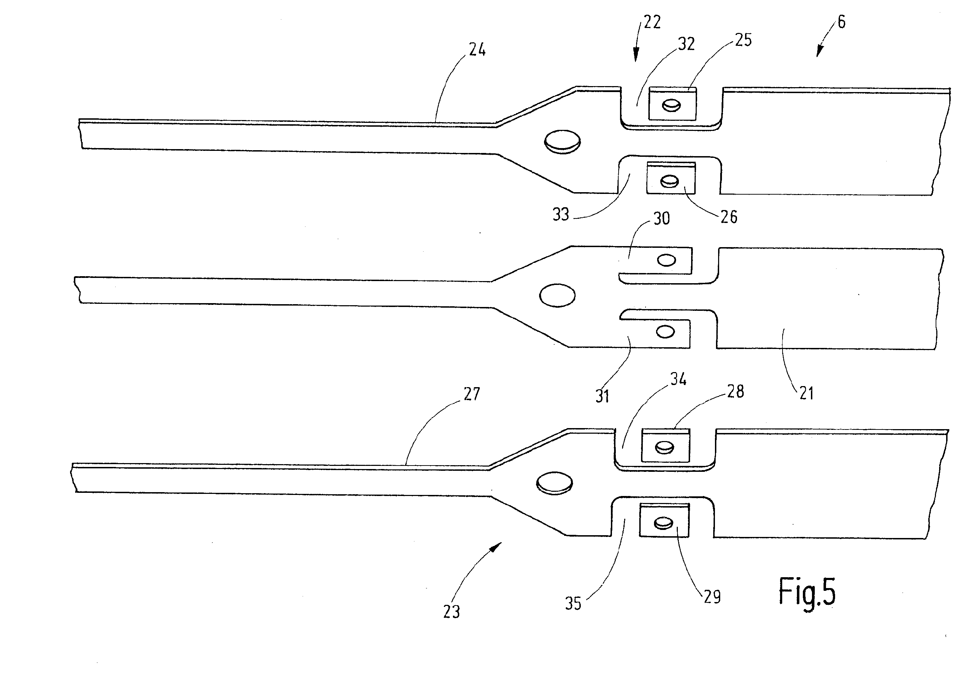

Der Tastarm 6 ist zur weiteren Verdeutlichung in Fig. 5 in Explosionsdarstellung veranschaulicht. Wie ersichtlich sind die Hebelelemente 24, 27 sowie die Halteelemente 25, 26, 28, 29 mit der Folie 21 im Wesentlichen konturgleich. Der einzige Unterschied besteht in den Federscharnieren 30, 31, in deren Bereich die Deckkörper 22, 23 jeweils Aussparungen 32, 33, 34, 35 aufweisen.

Die Herstellung des Tastarms 6 geht wie folgt:

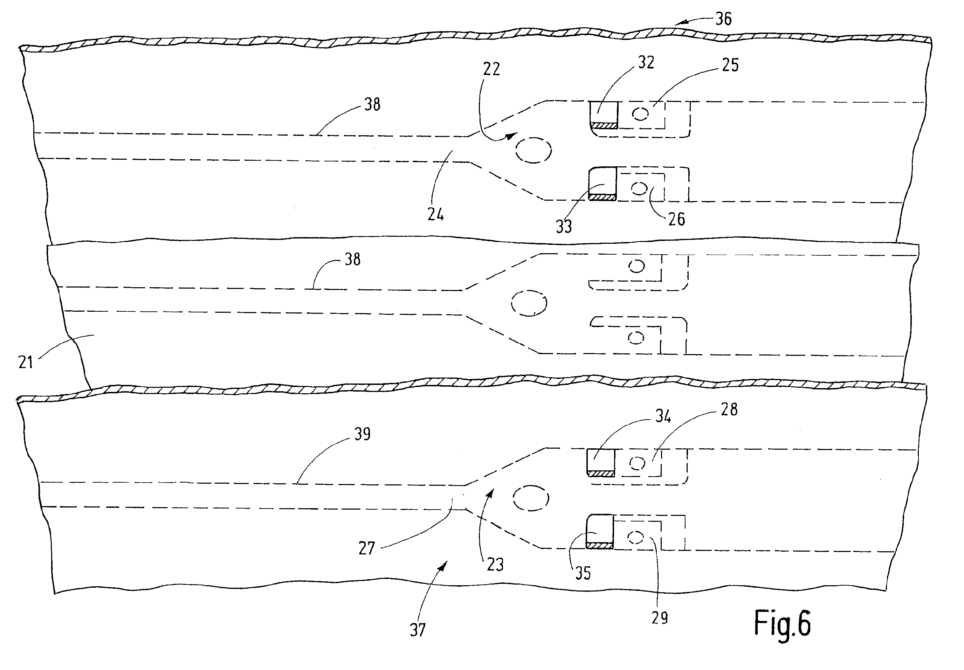

Bevorzugter Weise wird in einem Fertigungsgang jeweils eine ganze Gruppe von Tastarmen erzeugt. Es wird dazu auf Fig. 6 Bezug genommen, die eine federnde Folie 21 im Ausschnitt zeigt. Diese Folie 21 ist so groß, dass sich aus ihr vorzugsweise viele Tastarme erzeugen lassen. Es werden außerdem Deckkörperzuschnitte 36, 37 bereitgestellt, deren Größe vorzugsweise mit der Größe der Folie 21 im Wesentlichen übereinstimmt. Die Deckkörperzuschnitte 36, 37 dienen zur Herstellung der Deckkörper 22, 23, deren Kontur in Fig. 6 jeweils gestrichelt eingetragen ist. Die Deckkörper 22, 23 können bereits mittels Laserstrahls oder anderer geeigneter Mittel teilweise freigeschnitten sein. Jedenfalls aber hängen die späteren Halteelemente 25, 26, 28, 29 noch ortsfest in dem Deckkörperzuschnitt 36, 37. Gleiches gilt für die Hebelelemente 24, 27. Die Aussparungen 32 bis 35 sind jedoch bereits vorhanden. Sie sind durch geeignete Verfahren, wie Stanzen, Laserschneiden oder dergleichen hergestellt. Die federnde Folie 21 kann noch vollständig unperforiert sein. Es ist jedoch auch möglich, die Kontur 38 des späteren Tastarms, die in Fig. 6 gestrichelt angedeutet ist, teilweise freizuschneiden, wobei die Folie 21 jedoch ein zusammenhängendes Teil bleibt.

Es werden sodann die Deckkörperzuschnitte 36, 37 auf beide Seiten der Folie 21 platziert und so zueinander ausgerichtet, dass die Aussparung 32 mit der Aussparung 34 und die Aussparung 33 mit der Aussparung 35 fluchtet. Zur Ausrichtung können an den Deckkörperzuschnitten 36, 37 vorgesehene nicht weiter dargestellte Indexbohrungen dienen. Sind die Deckkörperzuschnitte 36, 37 und die Folie 21 insoweit zu einer Sandwichstruktur zusammengefügt, werden sie miteinander verbunden, beispielsweise durch Schweißpunkte. Beispielsweise kann mittels eines Lasers einer der Deckkörperzuschnitte 36, 37 an verschiedenen Stellen der Halteelemente 25, 26, 28, 29 und/oder verschiedenen Stellen der Hebelelemente 24 und/oder 27 so erwärmt werden, dass Schweißpunkte entstehen, die die Deckelemente 22, 23 mit der Folie 21 verbinden. Nachdem somit alle später freizuschneidenden Teile der Deckkörperzuschnitte 36, 37 mit der Folie 21 verbunden sind, kann der Tastarm 6 entlang der Kontur 38 freigeschnitten werden. Ist die Kontur 38 an der Folie 21 und/oder den Deckkörperzuschnitten 36 vorgeschnitten, beseitigt der Laserstrahl nun lediglich noch verbleibende Stege und vereinzelt somit den fertigen Tastarm. Dieser kann dann in das Tastgerät nach Fig. 1 eingebaut werden. Er kann dabei Tastarme, wie sie beispielsweise aus der DE 10 2005 035 785 B3 bekannt sind ersetzen, ohne dass dabei sonstige Änderungen an dem Tastgerät erforderlich wären. Der Tastarm ist robust und in großer Stückzahl einfach herzustellen. Eine gute Möglichkeit der Herstellung des Tastarms mit dem erfindungsgemäßen Verfahren ist, dass sich die Folie 21 unterbrechungsfrei über die gesamte Fläche des Tastarms 6 erstreckt, so dass der äußere Rand der Folie 21 mit dem äußeren Rand des Tastarms 6 übereinstimmt. Die Folie 21 kann aber auch aus zwei oder mehreren Stücken bestehen, die z.B. lückenlos aneinander grenzen.

Die Deckkörperzuschnitte 36, 37 können außerdem vor oder nach der genannten beschriebenen Herstellung des Tastarms 6 mit weiteren Elementen, wie beispielsweise Magnetkörpern, Reflektoren oder dergleichen versehen sein. Nach Herstellung des Tastarms 6 kann an diesem die Tastnadel 7 oder auch eine Fassung für diese angebracht werden.

Zur Herstellung von Tastarmen 6 wird auf eine Sandwichbauweise zurückgegriffen. Vorzugsweise wird dazu auf eine zentrale federnde Folie 21 beidseitig Deckkörper 22, 23 aufgebracht, die steif sind. Wenigstens einer der Deckkörper 22, 23 kann wenigstens lokal definierte magnetische Eigenschaften haben, um beispielsweise mit einer Sensorspule 11 zusammenzuwirken. Die Deckkörper 22, 23 sind mit der Folie 21 im Wesentlichen konturgleich und zwar bis auf kleine, vorzugsweise schlitzartige Aussparungen 32 bis 35, an denen die Folie 21 freiliegt, um Federscharniere zu bilden.

### Bezugszeichen

- 1: Tastgerät
- 2: Gehäuse
- 3: Kufe
- 4: Werkstückoberfläche
- 5: Pfeil
- 6: Tastarm
- 7: Tastnadel
- 8: Lager
- 9, 10: Einstellschraube
- 11: Sensorspule
- 12: Wicklung
- 13: Justierschraube
- 14, 15: Halteabschnitte
- 16, 17: Federscharniere
- 18: Nadelträgerabschnitt/Hebelabschnitt
- 19: Steg
- 20: Paddel
- 21: Folie
- 22, 23: Deckkörper
- 24: Hebelelement
- 25, 26: Halteelemente
- 27: Hebelelement
- 28, 29: Halteelemente
- 30, 31: Federscharniere
- 32 - 35: Aussparungen
- 36, 37: Deckkörperzuschnitte
- 38: Kontur

## Patentansprüche

1. Verfahren zur Herstellung eines Tastarms (6) für ein Tastsystem (1), insbesondere zur Profil- und/oder Rauheitsmessung, wobei der Tastarm (6) zumindest einen Halteabschnitt (14), zumindest einen Hebelabschnitt (18), und zumindest einen Blattfederabschnitt (30) aufweist, der den Halteabschnitt (14) mit dem Hebelabschnitt (18) schwenkbar verbindet, wobei der Tastarm (6) aus wenigstens drei Schichten (21, 22, 23) besteht, von denen eine als federnde Folie (21) ausgebildet ist, auf der die anderen Schichten (22, 23) angeordnet sind,
mit folgenden Schritten:
Bereitstellung einer federnden Folie (21),
Bereitstellen eines ersten Deckkörperzuschnitts (36),
Bereitstellen eines zweiten Deckkörperzuschnitts (37),
Positionieren und Ausrichten der Folie (21) zwischen dem ersten und dem zweiten Deckkörperzuschnitt (36, 37),
Verbinden der Deckkörperzuschnitte (36, 37) mit der Folie (21) zur Erzeugung einer Sandwichstruktur und
Aus- oder Freischneiden wenigstens eines Tastarms (6) aus der Sandwichstruktur.

2. Verfahren nach Anspruch 1 **dadurch gekennzeichnet, dass** der erste Deckkörper (36) eine Ausnehmung (32) zumindest an einer solchen Stelle aufweist, die einen Blattfederabschnitt (30) bilden soll, und dass der zweite Deckkörperzuschnitt (37) eine Ausnehmung (34) zumindest an einer solchen Stelle aufweist, die den Blattfederabschnitt (30) bilden soll.

3. Verfahren nach Anspruch 2 **dadurch gekennzeichnet, dass** die Ausnehmung (32) des ersten Deckkörperzuschnitts (36) und des zweiten Deckkörperzuschnitts (37) miteinander übereinstimmen.

4. Verfahren nach Anspruch 1 **dadurch gekennzeichnet, dass** an dem Deckkörperzuschnitt (36, 37) die Kontur des wenigstens einen Tastarms (6) vor dem Verbinden der Deckkörperzuschnitte (36, 37) wenigstens abschnittsweise freigeschnitten wird.

5. Verfahren nach Anspruch 1 **dadurch gekennzeichnet, dass** der erste Deckkörperzuschnitt (36) und der zweite Deckkörperzuschnitt (37) aus physikalisch unterschiedlichen Materialien bestehen.

6. Tastarm (6) für ein Tastsystem (1) insbesondere zur Profil- und/oder Rauheitsmessung,
mit zumindest einem Halteabschnitt (14),
mit zumindest einem Hebelabschnitt (18), und
mit zumindest einem Blattfederabschnitt (30), der den Halteabschnitt (14) mit dem Hebelabschnitt (18) schwenkbar verbindet,
wobei der Tastarm (6) aus wenigstens zwei Schichten (21, 22) besteht, von denen eine als federnde Folie (21) ausgebildet ist, auf der die zumindest eine andere Schicht (22) angeordnet ist, **dadurch gekennzeichnet, dass** die Folie (21) durch eine Metallfolie gebildet ist.

7. Tastarm nach Anspruch 6, **dadurch gekennzeichnet, dass** die Folie (21) an dem Halteabschnitt (14) und an dem Hebelabschnitt (18) jeweils in einer Sandwichanordnung gefasst ist und dass der Halteabschnitt (14) mindestens zwei Halteelemente (25, 26) aufweist zwischen denen die Folie (21) gefasst ist.

8. Tastarm nach Anspruch 7, **dadurch gekennzeichnet, dass** die Folie (21) mittig zwischen den Halteelementen (25, 26) gefasst ist und dass die Halteelemente (25, 26) mit der Folie (21) verbunden, vorzugsweise verschweißt sind.

9. Tastarm nach Anspruch 7, **dadurch gekennzeichnet, dass** wenigstens eines der Halteelemente (25, 25) und die Folie (21) miteinander übereinstimmende Ränder aufweisen.

10. Tastarm nach Anspruch 6, **dadurch gekennzeichnet, dass** der Hebelabschnitt (18) zumindest zwei Hebelelemente (24, 27) aufweist, zwischen denen die Folie (21) gefasst ist und dass die Hebelelemente (24, 27) mit der Folie (21) verbunden, vorzugsweise verschweißt sind.

11. Tastarm nach Anspruch 10, **dadurch gekennzeichnet, dass** die Folie (21) mittig zwischen den Hebelelementen (24, 27) gefasst ist.

12. Tastarm nach Anspruch 10, **dadurch gekennzeichnet, dass** wenigstens eines der Hebelelemente (24, 27) und die Folie (21) miteinander übereinstimmende Ränder aufweisen.

13. Tastarm nach Anspruch 8 und 10, **dadurch gekennzeichnet, dass** das Hebelelement (24) und das Halteelement (25), die auf der gleichen Seite der Folie (21) angeordnet sind, aus dem gleichen Material ausgebildet sind.

14. Tastarm nach Anspruch 8, **dadurch gekennzeichnet, dass** die Halteelemente (25, 26) aus unterschiedlichen Materialien bestehen.

15. Tastarm nach Anspruch 10, **dadurch gekennzeichnet, dass** die Hebelelemente (24, 27) aus unterschiedlichen Materialien bestehen.

## Claims

1. Method for producing a sensing arm (6) for a sensing system (1), in particular for profile and/or roughness measurement, wherein the sensing arm (6) comprises at least one holding portion (14), at least one lever portion (18), and at least one leaf spring portion (30) which connects the holding portion (14) pivotably to the lever portion (18), wherein the sensing arm (6) consists of at least three layers (21, 22, 23), one of which is formed as a sprung film (21) on which the other layers (22, 23) are arranged, with the following steps:
provision of a sprung film (21),
provision of a first covering body blank (36),
provision of a second covering body blank (37),
positioning and orientation of the film (21) between the first and the second covering body blanks (36, 37),
connection of the covering body blanks (36, 37) to the film (21) to create a sandwich structure, and
cutting at least one sensing arm (6) out of or free from the sandwich structure.

2. Method according to claim 1, **characterised in that** the first covering body (36) has a recess (32) at least at a point which is to form a leaf spring portion (30), and that the second covering body blank (37) has a recess (34) at least at a point which is to form the leaf spring portion (30).

3. Method according to claim 2, **characterised in that** the recess (32) of the first covering body blank (36) and of the second covering body blank (37) coincide with each other.

4. Method according to claim 1, **characterised in that** on the covering body blank (36, 37), the contour of the at least one sensing arm (6) is cut free at least in portions before connection of the covering body blanks (36, 37).

5. Method according to claim 1, **characterised in that** the first covering body blank (36) and the second covering body blank (37) consist of physically different materials.

6. Sensing arm (6) for a sensing system (1), in particular for profile and/or roughness measurement,
with at least one holding portion (14),
with at least one lever portion (18), and
with at least one leaf spring portion (30) which connects the holding portion (14) pivotably to the lever portion (18),
wherein the sensing arm (6) consists of at least two layers (21, 22), one of which is formed as a sprung film (21) on which the at least one other layer (22) is arranged, **characterised in that** the film (21) is formed by a metal film.

7. Sensing arm according to claim 6, **characterised in that** the film (21) is held on the holding portion (14) and on the lever portion (18) in a respective sandwich arrangement, and that the holding portion (14) has at least two holding elements (25, 26) between which the film (21) is held.

8. Sensing arm according to claim 7, **characterised in that** the film (21) is held centrally between the holding elements (25, 26), and that the holding elements (25, 26) are connected, preferably welded, to the film (21).

9. Sensing arm according to claim 7, **characterised in that** at least one of the holding elements (25, 26) and the film (21) have edges which coincide with each other.

10. Sensing arm according to claim 6, **characterised in that** lever portion (18) has at least two lever elements (24, 27) between which the film (21) is held, and that the lever elements (24, 27) are connected, preferably welded, to the film (21).

11. Sensing arm according to claim 10, **characterised in that** the film (21) is held centrally between the lever elements (24, 27).

12. Sensing arm according to claim 10, **characterised in that** at least one of the lever elements (24, 27) and the film (21) have edges which coincide with each other.

13. Sensing arm according to claims 8 and 10, **characterised in that** the lever element (24) and the holding element (25), which are arranged on the same side of the film (21), are made of the same material.

14. Sensing arm according to claim 8, **characterised in that** the holding elements (25, 26) consist of different materials.

15. Sensing arm according to claim 10, **characterised in that** the lever elements (24, 27) consist of different materials.

## Revendications

1. Procédé de fabrication d'un bras palpeur (6) pour un système de palpage (1), en particulier pour la mesure de profil et/ou de rugosité, le bras palpeur (6) présentant au moins une partie de support (14), au moins une partie de levier (18) et au moins une partie à lame de ressort (30) qui relie la partie de support (14) de façon pivotante à la partie de levier (18), le bras palpeur (6) étant constitué d'au moins trois couches (21, 22, 23) dont une est réalisée comme feuille faisant ressort (21) sur laquelle sont disposées les autres couches (22, 23),
comprenant les étapes suivantes :
mise à disposition d'une feuille faisant ressort (21),
mise à disposition d'un premier corps de recouvrement découpé à dimensions (36),
mise à disposition d'un deuxième corps de recouvrement découpé à dimensions (37),
positionnement et alignement de la feuille (21) entre le premier et le deuxième corps de recouvrement découpés à dimensions (36, 37),
assemblage des corps de recouvrement découpés à dimensions (36, 37) avec la feuille (21), en vue de réaliser une structure en sandwich, et
découpage ou dégagement par découpe d'au moins un bras palpeur (6) dans la structure en sandwich.

2. Procédé selon la revendication 1, **caractérisé en ce que** le premier corps de recouvrement (36) présente un évidement (32) au moins à un emplacement destiné à former une partie à lame de ressort (30), et **en ce que** le deuxième corps de recouvrement découpé à dimensions (37) présente un évidement (34) au moins à un emplacement destiné à former la partie à lame de ressort (30).

3. Procédé selon la revendication 2, **caractérisé en ce que** l'évidement (32) du premier corps de recouvrement découpé à dimensions (36) et du deuxième corps de recouvrement découpé à dimensions (37) coïncident l'un avec l'autre.

4. Procédé selon la revendication 1, **caractérisé en ce que**, avant l'assemblage des corps de recouvrement découpés à dimensions (36, 37), le contour du bras palpeur (6), au nombre d'au moins un, est dégagé par découpe, au moins en partie, dans le corps de recouvrement découpé à dimensions (36, 37).

5. Procédé selon la revendication 1, **caractérisé en ce que** le premier corps de recouvrement découpé à dimensions (36) et le deuxième corps de recouvrement découpé à dimensions (37) se composent de matériaux physiquement différents.

6. Bras palpeur (6) destiné à un système de palpage (1), en particulier pour la mesure de profil et/ou de rugosité,
comprenant au moins une partie de support (14),
comprenant au moins une partie de levier (18), et
comprenant au moins une partie à lame de ressort (30) qui relie la partie de support (14) à la partie de levier (18),
le bras palpeur (6) étant constitué d'au moins deux couches (21, 22) dont une est réalisée comme feuille faisant ressort (21) sur laquelle est disposée l'autre couche (22), au nombre d'au moins une,
**caractérisé en ce que** la feuille (21) est formée d'une feuille métallique.

7. Bras palpeur selon la revendication 6, **caractérisé en ce que** la feuille (21) est sertie sur la partie de support (14) et sur la partie de levier (18) respectivement dans une disposition en sandwich, et **en ce que** la partie de support (14) présente au moins deux éléments de support (25, 26), entre lesquels la feuille (21) est sertie.

8. Bras palpeur selon la revendication 7, **caractérisé en ce que** la feuille (21) est sertie au milieu entre les éléments de support (25, 26), et **en ce que** les éléments de support (25, 26) sont reliés à la feuille (21), de préférence soudés.

9. Bras palpeur selon la revendication 7, **caractérisé en ce qu'**au moins un des éléments de support (25, 25) et la feuille (21) présentent des bords qui coïncident les uns avec les autres.

10. Bras palpeur selon la revendication 6, **caractérisé en ce que** la partie de levier (18) présente au moins deux éléments de levier (24, 27), entre lesquels la feuille est sertie, et **en ce que** les éléments de levier (24, 27) sont reliés à la feuille (21), de préférence soudés.

11. Bras palpeur selon la revendication 10, **caractérisé en ce que** la feuille (21) est sertie au milieu entre les éléments de levier (24, 25).

12. Bras palpeur selon la revendication 10, **caractérisé en ce qu'**au moins un des éléments de levier (24, 27) et la feuille (21) présentent des bords qui coïncident les uns avec les autres.

13. Bras palpeur selon la revendication 8 et 10, **caractérisé en ce que** l'élément de levier (24) et l'élément de support (25), qui sont disposés sur le même côté de la feuille (21), sont réalisés dans le même matériau.

14. Bras palpeur selon la revendication 8, **caractérisé en ce que** les éléments de support (25, 26) se composent de matériaux différents.

15. Bras palpeur selon la revendication 10, **caractérisé en ce que** les éléments de levier (24, 27) se composent de matériaux différents.
